# EUROPEAN PATENT SPECIFICATION

(11) **EP 1 867 610 B1**
(45) Date of publication and mention of the grant of the patent: **08.09.2010**
(21) Application number: 07011198.4
(22) Date of filing: 07.06.2007
(51) Int. Cl.: C03B 37/018

(54) **Apparatus for carrying out a plasma chemical vapour deposition (PCVD) process and method for manufacturing an optical fibre**
Vorrichtung um ein Plasma-CVD-Verfahren durchzuführen und Verfahren zur Herstellung einer optischen Faser
Appareil utiisant un procédé de dépôt chimique en vapeur assité par plasma (PCVD) et méthode de fabrication d'une fibre optique.

(30) Priority: 16.06.2006 NL 1032015
(43) Date of publication of application: 19.12.2007
(73) Proprietor: Draka Comteq B.V., 1083 HJ Amsterdam (NL)
(72) Inventor: Deckers, Rob Hubertus Matheus, 5643 KB Eindhoven (NL); Hartsuiker, Johannes Antoon, 5624 KL Eindhoven (NL); Korsten, Marco, 5615 KP Eindhoven (NL); Van Stralen, Mattheus Jacobus Nicolaas, 5045 DV Tilburg (NL)
(74) Representative: op den Brouw-Sprakel, Vera Stefanie Irene

(56) References cited:
- US-A- 5 223 308
- US-A1- 2003 104 139
- US-A1- 2003 115 909
- US-A1- 2004 182 320

## Description

The present invention relates to an apparatus for carrying out a plasma chemical vapour deposition by means of which one or more layers of doped or undoped silica can be deposited on the interior of an elongated glass substrate tube, which apparatus comprises an elongated microwave waveguide that projects into a resonant cavity formed substantially cylindrically symmetrically around a cylindrical axis, along which axis the substrate tube can be positioned, wherein said resonant cavity is substantially annular in shape, with an inner cylindrical wall and an outer cylindrical wall, and wherein said inner cylindrical wall comprises a slit that extends in a full circle around said cylindrical axis, and wherein said microwave waveguide has a longitudinal axis, which extends substantially perpendicularly to said cylindrical axis so as to form a coaxial waveguide, and an axis which extends at an angle relative to said longitudinal axis so as to form a feed waveguide, in which coaxial waveguide an antenna is movable along the longitudinal axis.

The present invention further relates to a method for manufacturing an optical fibre by means of such an apparatus.

From US patent No. 5,223,308 there is known a deposition apparatus which comprises a microwave generator, in which a rectangular microwave waveguide is used for generating an electromagnetic field of intense microwave energy in a space in which an elongated hollow tube is moved continuously. Such a tube is formed of a synthetic resin, for example a nylon material, wherein a coating of silicon oxide, silicon nitride or silicon oxycarbide is applied by means of the aforesaid apparatus, which tubes are used as pipes for the hydraulic airconditioning system in automobiles in order to thus minimise the loss of liquid coolant, such as freon, into the atmosphere.

US patent application US 2003/0104139 relates to an apparatus for depositing a plasma chemical vapour deposition (PCVD) coating on the interior of a hollow glass tube, wherein an applicator comprising a waveguide and an applicator head is used, which waveguide functions to guide microwaves from a microwave generator to the applicator head. The waveguide has an elongated axis and a rectangular cross-section having a long axis and a short axis and being perpendicular to the elongated axis of the waveguide. A glass tube is positioned within the applicator head, and the applicator head is moved over said hollow glass tube, in which a coating is to be deposited, along the longitudinal axis of the tube.

US patent application US 2003/0115909 relates to an apparatus for depositing one or more glass layers on the interior of a hollow substrate tube, wherein an activator space of a microwave applicator surrounds the hollow substrate tube, with the microwaves generating a plasma in the interior of the hollow substrate tube, causing the glass-forming precursors to deposit SiO₂ onto the interior of the substrate tube.

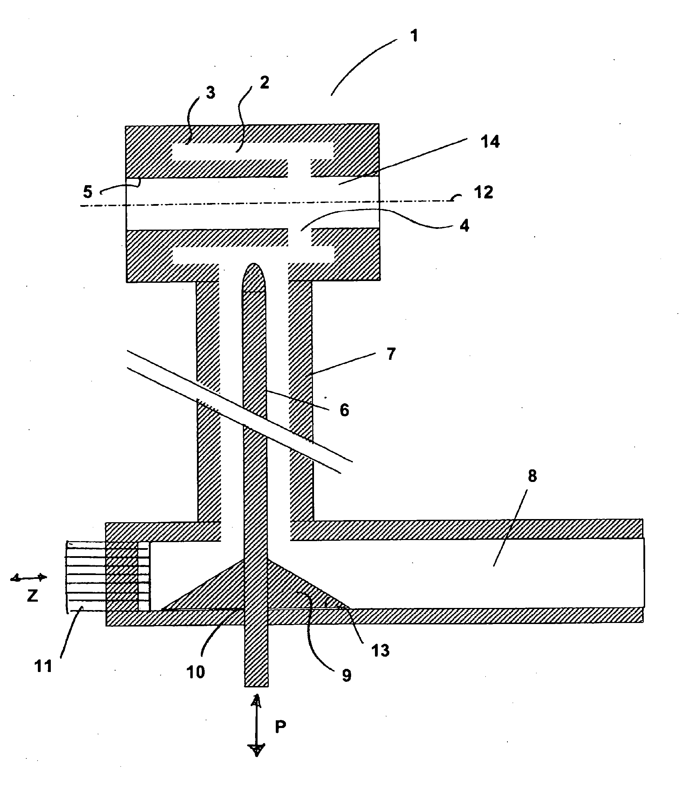

An apparatus for manufacturing optical fibres as mentioned in the introduction is known from US patent US 6,849,307 granted to the present inventors, which apparatus may be used within that context for manufacturing a so-called preform, from which an optical fibre can be drawn. According to the method for manufacturing such a preform that is known therefrom, an elongated vitreous substrate tube (comprised of quartz, for example) is coated on its interior cylindrical surface with layers of doped silica (for example germanium-doped silica). This can be achieved by positioning the substrate tube along the cylindrical axis of the resonant cavity and flushing the interior of the tube with a gaseous mixture, for example comprising O₂, SiCl₄ and GeCl₂. A localized plasma is concurrently generated within the cavity, causing the reaction of Si, O and Ge so as to effect direct deposition of Ge-doped SiOₓ on the interior surface of the substrate tube. Since such deposition only occurs in the vicinity of the localized plasma, the resonant cavity (and thus the plasma) must be swept along the cylindrical axis of the tube in order to uniformly coat its whole length. When coating is complete, the tube is thermally collapsed into a rod having a Ge-doped silica core portion and a surrounding undoped silica cladding portion. If an extremity of the rod is heated so that it becomes molten, a thin glass fibre can be drawn from the rod and wound on a reel; said fibre then has a core and cladding portion corresponding to those of the rod. Because the Ge-doped core has a higher refractive index than the undoped cladding, the fibre can function as a waveguide for optical signals, for example for use in propagating optical telecommunication signals. It should be noted that the gaseous mixture flushed through the substrate tube may also contain other components; the addition of C₂F₆, for example, causes a reduction in the refractive index of the doped silica. It should also be noted that the solid preform may be placed in a so-called jacket tube (comprised of undoped silica, for example) prior to the drawing procedure, so as to increase the quantity of undoped silica relative to doped silica in the final fibre. Another possibility of applying an extra amount of silica is the so-called overcladding by means of a plasma process or outside vapour deposition (OVD) process.

The use of such an optical fibre for telecommunication purposes requires that the optical fibre is substantially free from defects (for example discrepancies in the percentage of dopants, undesirable cross-sectional ellipticity and the like), because, when considered over a large length of the optical fibre, such defects may cause a significant attenuation of the signal being transported. It is important, therefore, to realise a very uniform and reproducible PCVD process, because the quality of the deposited PCVD layers will eventually determine the quality of the optical fibres; thus it is important that the plasma generated in the resonant cavity be rotationally symmetrical (around the cylindrical axis of the cavity). On the other hand, the costs of the production process will be affected advantageously if the preform can be given a larger diameter, because larger fibre lengths can then be obtained from a single preform. Increasing the diameter of the resonant cavity in order to thus make it possible to use a thicker substrate tube will lead to a plasma having a deteriorated rotational symmetry, and such a plasma can only be generated by using a much higher microwave power.

In the aforesaid PCVD apparatus, energy from a device capable of generating microwaves, for example a microwave oven, must be transferred to the annular resonant cavity so as to form a plasma zone in the interior of the substrate tube. This means that the microwaves are supplied to the feed waveguide and can subsequently reach the annular resonant cavity via a coaxial waveguide disposed on the feed waveguide, which is arranged at an angle with respect to the longitudinal axis. A critical step in such a construction is the transition from the feed waveguide to the coaxial waveguide. The antenna that is used therewith is centred within the coaxial waveguide, using one or more centring components. Such centring components enable the antenna to move along the longitudinal axis in the coaxial waveguide and furthermore ensure that the antenna cannot touch the wall of the coaxial waveguide. The centring components thus used must be permeable to microwaves.

The present inventors have found that such materials are susceptible to undesirable sparking and moreover reduce the maximum microwave power supplied to the resonant cavity, which is attributed to the relatively low dielectric strength of such materials. In addition to that the present inventors have found that the surface roughness of such materials introduces minor air channels, which adversely affects the performance of the resonant cavity. The present inventors have furthermore established that if sparking occurs, the mechanical loads to which such materials are subjected are so heavy that cracking or even evaporation may ensure, resulting in damage to the resonant cavity and eventually replacing the resonant cavity. Because high rates of deposition of glass layers on the interior of the substrate tube are desirable, which requires a high microwave power, such centring components constitute an undesirable limitation.

Thus it is an aspect of the present invention to develop an apparatus for carrying out a plasma chemical vapour deposition (PCVD) process, which apparatus makes it possible to employ high microwave power levels for attaining high deposition rates.

Another aspect of the present invention is to develop an apparatus for carrying out a plasma chemical vapour deposition (PCVD) process in which the transfer of energy from microwaves to the plasma in the waveguide is optimised.

Yet another aspect of the present invention is to provide an apparatus for carrying out a plasma chemical vapour deposition (PCVD) process in which the occurrence of undesirable reflection of microwaves during the passage thereof from the feed waveguide to the coaxial waveguide is minimised.

According to the present invention, the apparatus for carrying out a plasma chemical vapour deposition (PCVD) process as mentioned in the introduction is characterised in that the antenna bisects the feed waveguide, and that a guide element is present in the interior of the feed waveguide at the point where the antenna bisects the feed waveguide, which guide element enables the microwaves to pass from the feed waveguide to the coaxial waveguide.

When such a special construction of the antenna in the coaxial waveguide is used, it is possible to leave out the centring components that are known from the prior art. Since the antenna bisects the feed waveguide, centration of the antenna in the coaxial waveguide can be realised in a simple manner. The use of such a construction furthermore makes it possible to clean the resonant cavity in a simple manner when sparking occurs and use the resonant cavity again, which leads to a considerable reduction in costs. In addition to that, because the antenna bisects the feed waveguide and is partially located outside the feed waveguide, therefore, it is possible to cool the antenna, using forced gas or liquid cooling, which cooling may be considered to be necessary when high microwave power levels are used. Furthermore it has now been found that maintaining the antenna at the correct central position in the coaxial waveguide is less critical for a correct operation.

According to the present invention, a guide element is present in the interior of the feed waveguide at the point where the antenna bisects the feed waveguide, which guide element enables the microwaves to pass from the feed waveguide to the coaxial waveguide. Such a guide element must be so configured that the passage from the feed portion to the coaxial portion of the waveguide will not cause reflection of microwaves, which reflection has an adverse effect on the microwave power supplied to the plasma zone.

Suitable embodiments of the present guide element include a conical or spherical shape, the bottom surface of which abuts against the inner wall of the feed waveguide, so that the guide element is located in the feed waveguide. The bottom surface is understood to mean that part of the guide element which makes contact with the inner wall of the feed waveguide; in the case of a conical shape, for example, this is the base of the cone. It is in particular preferable for the antenna to be movable in longitudinal direction through the apex of the conical or spherical shape, in which case the conical or spherical shape is symmetrically bisected.

In order to further optimise the transition from rectangular to coaxial, it is preferable in a special embodiment that an element which is movable along the longitudinal axis of the feed waveguide be present in said feed waveguide, which element extends over the entire cross-section of the feed waveguide.

In a special embodiment, the slit in the internal cylindrical wall preferably comprises interruptions, so that in fact a number of slits are provided.

The present invention further relates to a method for manufacturing an optical fibre by means of a plasma chemical vapour deposition process, which method comprises the steps of:
carrying out a plasma chemical vapour deposition process for depositing one or more doped or undoped layers of silica on the interior surface of an elongated glass substrate tube,
subjecting the substrate tube to a thermal contraction treatment so as to form a solid preform,
melting one extremity of the solid preform and drawing an optical fibre therefrom.

In a special embodiment of the present method, the antenna is preferably moved along the longitudinal axis in the coaxial waveguide during the plasma chemical vapour deposition process in order to optimise the passage of the microwaves from the feed waveguide to the coaxial waveguide.

Preferably, the element present in the feed waveguide is moved along the longitudinal axis of the feed waveguide during the plasma chemical vapour deposition process in order to optimise the transfer of energy to the plasma zone.

The present invention will now be explained in more detail with reference to a figure, in which connection it should be noted, however, that the present invention is by no means limited to such a special embodiment.

In the appended figure, the apparatus for carrying out a plasma chemical vapour deposition (PCVD) process is schematically indicated at 1. The apparatus 1 comprises in internal guide or antenna 6, which is positioned in a coaxial waveguide 7. The antenna 6 is movable along a longitudinal axis in the coaxial waveguide 7, in the direction indicated by the arrow P, terminating in a resonant cavity 2, which is substantially annular in shape, having an inner cylindrical wall 5 and an outer cylindrical wall 3. The inner cylindrical wall 5 comprises a slit 4, which extends in a full circle around the cylindrical axis 12 (in a plane perpendicular to the plane of the figure). The antenna 6 has a (central) longitudinal axis, which extends substantially perpendicularly to the cylindrical axis 12. Said longitudinal axis and said slit 4 are staggered relative to each other, such that the longitudinal axis does not bisect the slit 4. Since deposition of glass layers only occurs in the vicinity of the plasma zone, the resonant cavity 2 (and thus the plasma zone) must be moved along the cylindrical axis 12 so as to coat the substrate tube (not shown) uniformly along the entire length thereof.

The feed waveguide 8 is connected to a klystron (not shown) for supplying microwaves to the feed waveguide 8, which microwaves subsequently find their way into the coaxial waveguide 7 and finally generate a plasma zone in the glass substrate tube (not shown) present in the resonant cavity 2, in particular in the cavity 14, which plasma zone creates conditions such that the glass-forming precursors being supplied to the interior of the substrate tube will deposit on the inner wall of the substrate tube so as to form one or more glass layers. The essence of the present invention is the fact that the antenna 6 bisects the feed waveguide 8 near the bisection point 10 and may be present outside the feed waveguide 8, therefore. Such a construction makes it possible to leave out centring components, which are usually provided in the coaxial waveguide 7. To ensure an optimum passage from the feed waveguide 8 to the coaxial waveguide 7, a guide element 9 is provided, whose bottom surface 13 abuts against the inner wall of the feed waveguide 8. To realise a further optimisation of the microwave power, an element 11 is provided in the feed waveguide 8, which element is movable in the direction indicated by the arrow Z along the longitudinal axis of the feed waveguide. The feed waveguide 8 is preferably constructionally connected to the coaxial waveguide 7 in such a manner that the antenna 6 that is movable in the coaxial waveguide 7 does not cross the feed waveguide 8 in the centre thereof. In other words, the part of the feed waveguide 8 in which the element 11 is present is smaller in length than the part of the feed waveguide 8 in which no element 11 is present.

## Claims

1. An apparatus (1) for carrying out a plasma chemical vapour deposition process, by means of which one or more layers of doped or undoped silica are deposited on the interior of an elongated glass substrate tube, which apparatus (1) comprises an elongated microwave waveguide (7) that projects into a resonant cavity (2) formed substantially cylindrically symmetrically around a cylindrical axis (12), along which axis the substrate tube is positioned, wherein
said resonant cavity (2) is substantially annular in shape, with an inner cylindrical wall (5) and an outer cylindrical wall (3), and wherein
said inner cylindrical wall (5) comprises a slit (4) that extends in a full circle around said cylindrical axis (12), and wherein
said microwave guide (7) has a longitudinal axis, which extends substantially perpendicularly to said cylindrical axis (12) so as to form a coaxial waveguide (7), and an axis which extends at an angle relative to said longitudinal axis so as to form a feed waveguide (8), in which coaxial waveguide (7) an antenna (6) is movable along the longitudinal axis, **characterised in that** said antenna (6) bisects said feed waveguide (8) and
that a guide element (9) is present in the interior of the feed waveguide (8) at the point where the antenna (6) bisects the feed waveguide (8), which guide element (9) enables the microwaves to pass from the feed waveguide (8) to the coaxial waveguide (7).

2. An apparatus according to claim 1, **characterised in that** the guide element (9) has a conical or spherical shape, the bottom surface of which abuts against the inner wall of the feed waveguide (8).

3. An apparatus according to claim 2, **characterised in that** the antenna (6) is movable in longitudinal direction through the apex of the conical or spherical shape, in which case the conical or spherical shape is symmetrically bisected.

4. An apparatus according to any one or more of the preceding claims, **characterised in that** an element (11) which is movable along the longitudinal axis of the feed waveguide (8) is present in said feed waveguide (8), which element extends over the entire cross-section of the feed waveguide (8).

5. An apparatus according to any one or more of the preceding claims, **characterised in that** the slit (4) in the internal cylindrical wall (5) comprises interruptions.

6. An apparatus according to any one or more of the preceding claims, **characterised in that** the feed waveguide (8) is arranged at an angle perpendicular to the longitudinal axis.

7. A method for manufacturing an optical fibre by means of a plasma chemical vapour deposition process, which method comprises the following steps:
carrying out a plasma chemical vapour deposition process for depositing one or more doped or undoped layers of silica on the interior surface of an elongated glass substrate tube,
subjecting the substrate tube to a thermal contraction treatment so as to form a solid preform,
melting one extremity of the solid preform and drawing an optical fibre therefrom, **characterised in that** said plasma chemical vapour deposition process is carried out in an apparatus (1) as defined in any one or more of the claims 1-6, wherein the substrate tube is placed along the cylindrical axis (12) and within the inner cylindrical wall (5) of the resonant cavity (2), wherein said substrate tube and said resonant cavity (2) are substantially coaxial, and wherein the resonant cavity (2) is moved reciprocatingly along the length of the substrate tube so as to effect the deposition of one or more doped or undoped layers of silica on the interior of the substrate tube.

8. A method according to claim 7, **characterised in that** the antenna (6) is moved along the longitudinal axis in the coaxial waveguide (7) during the plasma chemical vapour deposition process in order to optimise the passage of the microwaves from the feed waveguide (8) to the coaxial waveguide (7).

9. A method according to any one or more of the claims 7-8, **characterised in that** the element (11) present in the feed waveguide (8) is moved along the longitudinal axis of the feed waveguide (8) during the plasma chemical vapour deposition process in order to optimise the transfer of energy to the plasma zone.

## Patentansprüche

1. Vorrichtung (1) zum Durchführen eines plasmachemischen Gasphasenabscheidungsprozesses, durch den eine Schicht oder mehrere Schichten von dotiertem oder undotiertem Siliziumoxid an der Innenseite eines länglichen Glassubstratrohrs abgeschieden wird bzw. werden, wobei die Vorrichtung (1) einen länglichen Mikrowellen-Wellenleiter (7) umfasst, der in einen Resonanzhohlraum (2), welcher im Wesentlichen zylindersymmetrisch um eine Zylinderachse (12) ausgebildet ist, hervorragt, wobei das Substratrohr entlang der Achse positioniert wird, wobei
der Resonanzhohlraum (2) im Wesentlichen ringförmig mit einer inneren zylindrischen Wand (5) und einer äußeren zylindrischen Wand (3) ist, und wobei
die innere zylindrische Wand (5) einen Schlitz (4), der sich in einem Vollkreis um die Zylinderachse (12) erstreckt, umfasst, und wobei
der Mikrowellenleiter (7) eine Längsachse, die sich im Wesentlichen senkrecht zu der Zylinderachse (12) erstreckt, so dass ein koaxialer Wellenleiter (7) ausgebildet wird, und eine Achse, die sich in einem Winkel relativ zu der Längsachse erstreckt, so dass ein Zuführungswellenleiter (8) ausgebildet wird, aufweist, wobei in dem koaxialen Wellenleiter (7) eine Antenne (6) entlang der Längsachse beweglich ist, **dadurch gekennzeichnet, dass** die Antenne (6) den Zuführungwellenleiter (8) zweiteilt, und
dass ein Führungselement (9) im Inneren des Zuführungswellenleiters (8) an dem Punkt, an dem die Antenne (6) den Zuführungswellenleiter (8) zweiteilt, vorgesehen ist, wobei das Führungselement (9) erlaubt, dass die Mikrowellen von dem Zuführungswellenleiter (8) zu dem koaxialen Wellenleiter (7) passieren.

2. Vorrichtung nach Anspruch 1, **dadurch gekennzeichnet, dass** das Führungselement (9) eine Kegelform oder eine Kugelform aufweist, deren Bodenfläche an der Innenwand des Zuführungswellenleiters (8) anliegt.

3. Vorrichtung nach Anspruch 2, **dadurch gekennzeichnet, dass** die Antenne (6) in einer Längsrichtung durch den Scheitelpunkt der Kegelform oder Kugelform beweglich ist, wobei die Kegelform oder Kugelform symmetrisch zweigeteilt wird.

4. Vorrichtung nach einem oder mehreren der vorhergehenden Ansprüche, **dadurch gekennzeichnet, dass** ein Element (11), welches entlang der Längsachse des Zuführungswellenleiters (8) beweglich ist, in dem Zuführungswellenleiter (8) vorgesehen ist, wobei sich das Element über den gesamten Querschnitt des Zuführungswellenleiters (8) erstreckt.

5. Vorrichtung nach einem oder mehreren der vorhergehenden Ansprüche, **dadurch gekennzeichnet, dass** der Schlitz (4) in der inneren zylindrischen Wand (5) Unterbrechungen umfasst.

6. Vorrichtung nach einem oder mehreren der vorhergehenden Ansprüche, **dadurch gekennzeichnet, dass** der Zuführungswellenleiter (8) in einem Winkel senkrecht zu der Längsachse angeordnet ist.

7. Verfahren zum Herstellen einer optischen Faser mittels eines plasmachemischen Gasphasenabscheidungsprozesses, wobei das Verfahren die folgenden Schritte umfasst:
Durchführen eines plasmachemischen Gasphasenabscheidungsprozesses zum Abscheiden einer oder mehrerer dotierter oder undotierter Schichten von Siliziumoxid an der Innenoberfläche eines länglichen Glassubstratrohrs,
wobei das Substratrohr einer thermischen Kontraktionsbehandlung unterzogen wird, so dass eine feste Vorform gebildet wird,
Schmelzen eines Endpunkts der festen Vorform und Ziehen einer optischen Faser daraus, **dadurch gekennzeichnet, dass** der plasmachemische Gasphasenabscheidungsprozess in einer Vorrichtung (1), wie sie in einem oder mehreren der Ansprüche 1-6 definiert ist, durchgeführt wird, wobei das Substratrohr entlang der Zylinderachse (12) und innerhalb der inneren zylindrischen Wand (5) des Resonanzhohlraums (2) platziert wird, wobei das Substratrohr und der Resonanzhohlraum (2) im Wesentlichen koaxial sind, und wobei der Resonanzhohlraum (2) entlang der Länge des Substratrohrs hin- und herbewegt wird,
so dass die Abscheidung einer oder mehrerer dotierter oder undotierter Schichten von Siliziumoxid an der Innenseite des Substratrohrs bewirkt wird.

8. Verfahren nach Anspruch 7, **dadurch gekennzeichnet, dass** die Antenne (6) entlang der Längsachse in dem koaxialen Wellenleiter (7) während des plasmachemischen Gasphasenabscheidungsprozesses bewegt wird, um den Übergang der Mikrowellen von dem Zuführungswellenleiter (8) zu dem koaxialen Wellenleiter (7) zu optimieren.

9. Verfahren nach einem oder mehreren der Ansprüche 7-8, **dadurch gekennzeichnet, dass** das in dem Zuführungswellenleiter (8) vorgesehene Element (11) entlang der Längsachse des Zuführungswellenleiters (8) während des plasmachemischen Gasphasenabscheidungsprozesses bewegt wird, um die Energieübertragung zu der Plasmazone zu optimieren.

## Revendications

1. Appareil (1) pour la mise en oeuvre d'un procédé de dépôt chimique en phase vapeur par plasma, au moyen duquel une ou plusieurs couches de silice dopée ou non dopée sont déposées à l'intérieur d'un tube allongé en verre servant de substrat, appareil (1) qui comprend un guide d'ondes allongé pour microondes (7) qui se projette dans une cavité résonante (2) formée de manière substantiellement cylindrique symétriquement autour d'un axe vertical (12), axe le long duquel le tube servant de substrat est positionné, dans lequel
ladite cavité résonante (2) est de forme substantiellement annulaire, avec une paroi cylindrique intérieure (5) et une paroi cylindrique extérieure (3), et dans lequel
ladite paroi cylindrique intérieure (5) comprend une fente (4) qui s'étend dans un cercle complet autour dudit axe cylindrique (12), et dans lequel
ledit guide de microondes (7) possède un axe longitudinal, qui s'étend substantiellement perpendiculairement audit axe cylindrique (12) de manière à former un guide d'ondes coaxial (7), et un axe qui s'étend à un angle par rapport audit axe longitudinal de manière à former un guide d'ondes d'alimentation (8), guide d'ondes coaxial (7) dans lequel une antenne (6) est mobile le long de l'axe longitudinal, **caractérisé en ce que** ladite antenne (6) divise en deux ledit guide d'ondes d'alimentation (8), et ce qu'un élément de guidage (9) est présent à l'intérieur du guide d'ondes d'alimentation (8) au point où l'antenne (6) divise en deux le guide d'ondes d'alimentation (8), élément de guidage (9) qui permet aux microondes de passer du guide d'ondes d'alimentation (8) au guide d'ondes coaxial (7).

2. Appareil suivant la revendication 1, **caractérisé en ce que** l'élément de guidage (9) a une forme conique ou sphérique, dont la surface inférieure est en appui contre la paroi intérieure du guide d'ondes d'alimentation (8).

3. Appareil suivant la revendication 2, **caractérisé en ce que** l'antenne (6) est mobile dans une direction longitudinale à travers l'apex de la forme conique ou sphérique, auquel cas la forme conique ou sphérique est divisée en deux de manière symétrique.

4. Appareil suivant une ou plusieurs quelconques des revendications précédentes, **caractérisé en ce qu'**un élément (11) qui est mobile le long de l'axe longitudinal du guide d'ondes d'alimentation (8) est présent dans ledit guide d'ondes d'alimentation (8), élément qui s'étend sur la section transversale totale du guide d'ondes d'alimentation (8).

5. Appareil suivant une ou plusieurs quelconques des revendications précédentes, **caractérisé en ce que** la fente (4) dans la paroi cylindrique intérieure (5) comprend des interruptions.

6. Appareil suivant une ou plusieurs quelconques des revendications précédentes, **caractérisé en ce que** le guide d'ondes d'alimentation (8) est disposé à un angle perpendiculaire à l'axe longitudinal.

7. Procédé pour la production d'une fibre optique au moyen d'un procédé de dépôt chimique en phase vapeur par plasma, procédé qui comprend les étapes suivantes consistant à :
mettre en oeuvre un procédé de dépôt chimique en phase vapeur par plasma pour déposer une ou plusieurs couches dopées ou non dopées de silice sur la surface inférieure d'un tube allongé en verre servant de substrat,
soumettre le tube servant de substrat à un traitement de contraction thermique de manière à former une préforme pleine,
faire fondre une extrémité de la préforme pleine et étirer une fibre optique à partir de celle-ci, **caractérisé en ce que** ledit procédé de dépôt chimique en phase vapeur par plasma est mis en oeuvre dans un appareil (1) tel que défini dans une ou plusieurs quelconques des revendications 1 à 6, dans lequel le tube servant de substrat est placé le long de l'axe cylindrique (12) et à l'intérieur de la paroi cylindrique intérieure (5) de la cavité résonante (2), dans lequel ledit tube servant de substrat et ladite cavité résonante (2) sont substantiellement coaxiaux, et dans lequel la cavité résonante (2) est déplacée de manière alternative le long de la longueur du tube servant de substrat de manière à effectuer le dépôt d'une ou plusieurs couches dopées ou non dopées de silice à l'intérieur du tube servant de substrat.

8. Procédé suivant la revendication 7, **caractérisé en ce que** l'antenne (6) est déplacée le long de l'axe longitudinal dans le guide d'ondes coaxial au cours du procédé de dépôt chimique en phase vapeur par plasma afin d'optimiser le passage des microondes du guide d'ondes d'alimentation (8) au guide d'ondes coaxial (7).

9. Procédé suivant une ou plusieurs quelconques des revendications 7 et 8, **caractérisé en ce que** l'élément (11) présent dans le guide d'ondes d'alimentation (8) est déplacé le long de l'axe longitudinal du guide d'ondes d'alimentation (8) au cours du procédé de dépôt chimique en phase vapeur par plasma afin d'optimiser le transfert d'énergie à la zone de plasma.
